# EUROPÄISCHE PATENTANMELDUNG

(11) **EP 2 130 880 A1**
(43) Veröffentlichungstag der Anmeldung: **09.12.2009**
(21) Anmeldenummer: 09161119.4
(22) Anmeldetag: 26.05.2009
(51) Int. Cl.: C09D 11/00

(54) **Ink Jet Tinte**

(30) Priorität: 05.06.2008 DE 102008026894
(71) Anmelder: Evonik Degussa GmbH, 45128 Essen (DE)
(72) Erfinder: McIntosh, Ralph, 63457, Hanau (DE); Tauber, Gerd, 63500, Seligenstadt (DE); Kalbitz, Werner, 63517, Rodenbach (DE); Lüdtke, Stephan, 63571, Gelnhausen (DE); Zimmermann, Dr. Jutta, 63755, Alzenau (DE); Karl, Dr. Alfons, 63584, Gründau (DE); Forster, Dr. Frank, 63825, Schöllkrippen (DE)

(57) **Zusammenfassung**

Ink Jet Tinte enthaltend ein modifiziertes Pigment, wobei das modifizierte Pigment ein Pigment mit gebundenen organischen Gruppen von unsubstituierten oder substituierten 1,2-Benzoldicarbonsäuren und/oder deren Salze ist.

## Beschreibung

Die Erfindung betrifft eine Ink Jet Tinte sowie deren Verwendung.

Aus US 5,922,118 und US 5,554,739 sind modifizierte Pigmente mit aromatischen oder aliphatischen Gruppen bekannt.

Aus EP 1 061 106 sind Ink Jet Tinten enthaltend ein Farbmittel mit funktionellen Gruppen bekannt, wobei Estergruppen 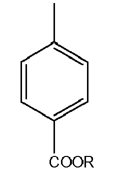 das Ausbluten und die Wasserfestigkeit und 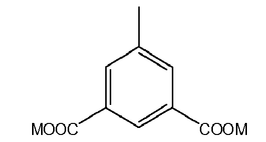 Gruppen die Wasserdispergierbarkeit verbessern.

Ferner sind aus EP 1 061 107 Ink Jet Tinten enthaltend ein Farbmittel mit funktionellen Gruppen bekannt, wobei -R₁-COOM und -Ar-CONHR₁COOM das Ausbluten und die Wasserfestigkeit und 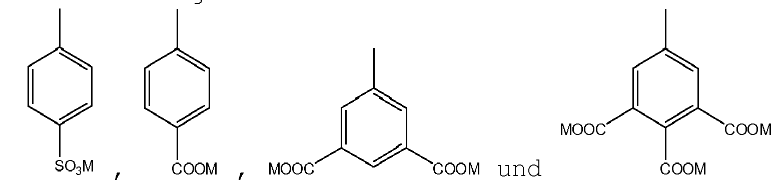 Gruppen die Wasserdispergierbarkeit verbessern.

Die bekannten Ink Jet Tinten haben den Nachteil, dass diese beim Druck auf Papier stark Ausbluten.

Aufgabe der Erfindung ist es eine Ink Jet Tinte zur Verfügung zu stellen, die beim Druck ein geringes Ausbluten ("intercolor bleeding") zeigt.

Gegenstand der Erfindung ist eine Ink Jet Tinte enthaltend ein modifiziertes Pigment, welches dadurch gekennzeichnet ist, dass das modifizierte Pigment ein Pigment mit gebundenen organischen Gruppen von unsubstituierten oder substituierten 1,2-Benzoldicarbonsäuren und/oder deren Salze ist.

Die gebundenen organischen Gruppen von unsubstituierten oder substituierten 1,2-Benzoldicarbonsäuren und/oder deren Salze können über ein C-Atom des Benzolringes an das Pigment angebunden sein.

Die gebundenen organischen Gruppen von unsubstituierten oder substituierten 1,2-Benzoldicarbonsäurengruppen und/oder deren Salze können Verbindungen der allgemeinen Formel 1 oder 2, 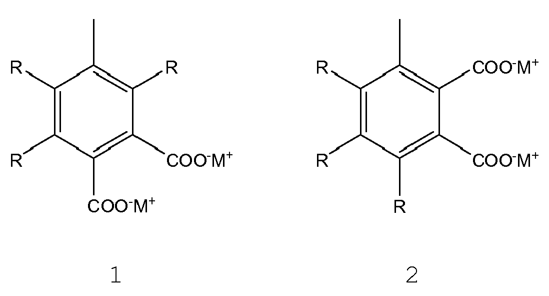 sein,
wobei R gleich oder verschieden sind und aus H, Akzeptorgruppen, Donatorgruppen, Alkyl- oder Arylgruppen mit Akzeptor- beziehungsweise Donatorgruppen, hydrophilen und/oder hydrophoben Gruppen bestehen und M⁺ gleich H⁺, Na⁺, K⁺, Li⁺, NH₄⁺, Trimethylammonium (CH₃)₃NH⁺ und Tetramethylammonium (CH₃)₄N⁺ ist.

Die Gruppe R ist keine COO⁻M⁺-Gruppe.

Akzeptorgruppen können -CO-R¹, -CN, -SO₂R¹ oder -SO₂OR¹, mit R¹ = Metall, H, Alkyl, Aryl, Ammonium oder funktionalisiertes Alkyl oder Aryl sein. Donatorgruppen können SR², OR² oder N(R²)₂, mit R² = H, Alkyl, Aryl oder funkionalisiertes Alkyl oder Aryl, sein.

Hydrophile Gruppen können SO₃Me (Me = Metall) oder -(CH₂-CH₂-O)ₙ-R², mit n=1-45, sein. Hydrophobe Gruppen können Alkyl, Aryl, Fluoralkyl, Perfluoralkyl, Fluoraryl oder Perfluoraryl sein.

Die organischen Gruppen R können:
substituiert oder unsubstituiert, verzweigt oder unverzweigt sein,
eine aliphatische Gruppe sein, beispielsweise Reste aus Alkanen, Alkenen, Alkoholen, Ethern, Aldehyden, Ketonen, Estern, Kohlenwasserstoffen, Sulfonsäuren, Aminen, Trialkylammonium-, Trialkylphosphonium- oder Dialkylsulfoniumsalzen,
eine cyclische Gruppe sein, beispielsweise alicyclische Kohlenwasserstoffe, wie zum Beispiel Cycloalkyle oder Cycloalkenyle, heterocyclische Verbindungen, wie zum Beispiel Pyrrolidinyl-, Pyrrolinyl-, Piperidinyl- oder Morpholinylgruppen, Arylgruppen, wie zum Beispiel Phenyl-, Naphthyl- oder Anthracenylgruppen, oder Heteroarylgruppen, wie zum Beispiel Imidazolyl-, Pyrazolyl-, Pyridinyl-, Thienyl-, Thiazolyl-, Furyl- oder Indolylgruppen,
eine heterocyclische Gruppe sein, enthaltend Stickstoff oder weitere Heteroatome und einen drei-, vier-, fünf-, sechs- oder höhergliedrigen Ring bilden, der wiederum durch H, Alkyl- oder Arylgruppen mit Akzeptor- beziehungsweise Donatorsubstituenten oder Teilen von cyclischen Systemen mit Akzeptor- beziehungsweise Donatorsubstituenten und/oder hydrophilen beziehungsweise hydrophoben Gruppen substituiert ist,
durch weitere funktionelle Gruppen substituiert sein,
eine chromophore Gruppe oder ein Farbstoff sein oder
geeignete reaktive Verbindungen sein, wie zum Beispiel Triarylammonium-, Triarylphosphonium-, Diarylsulfonium- und Aryliodoniumsalze.

Das modifizierte Pigment kann die folgenden Strukturen haben 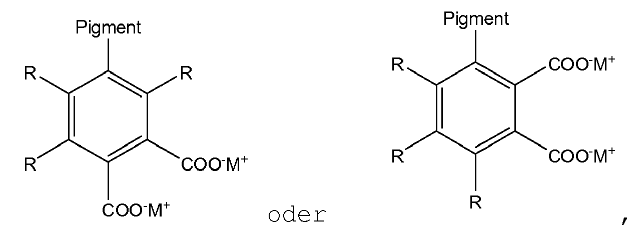 wobei ein oder mehrere gebundene organische Gruppen von unsubstituierten oder substituierten 1,2-Benzoldicarbonsäurengruppen und/oder deren Salze an das Pigment gebunden sein können.

Die Gruppe der organischen Verbindungen der allgemeinen Formel 1 und 2 können dabei auf die potentiellen Anwendungsgebiete maßgeschneidert sein, da das Reaktionsprinzip beispielsweise sowohl die Einführung von hydrophilen, wie auch von lipophilen Gruppen gestattet. Die Gruppen können auch ionisch, polymer oder für weitere Reaktionen reaktiv sein. Über die Gruppen können unterschiedliche, anwendungstechnische interessante Eigenschaften des Pigments gezielt verändert werden. So kann beispielsweise die Hydrophilie des Kohlenstoffmaterials so weit gesteigert werden, dass das Kohlenstoffmaterial ohne Verwendung eines Netzmittels in wässrigen Medien stabile Dispersionen bildet.

Verbindungen der allgemeinen Formel 1 und 2 können beispielsweise sein 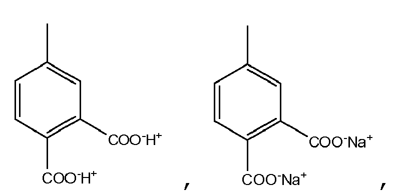 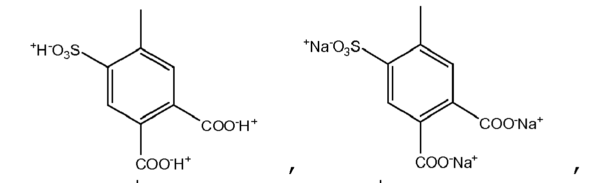 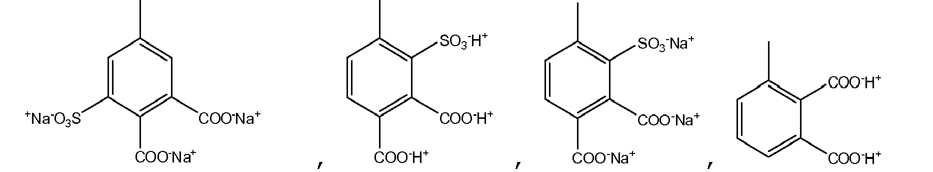 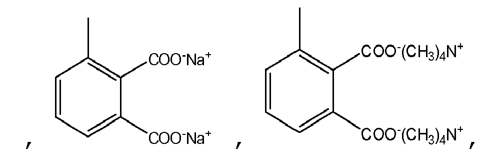 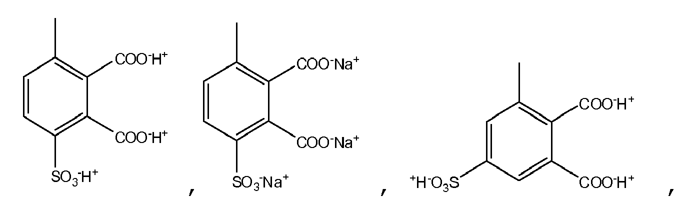 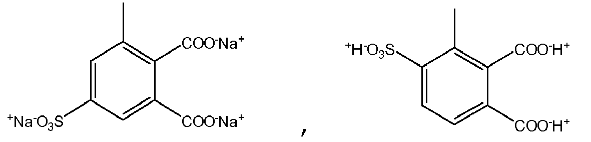 oder

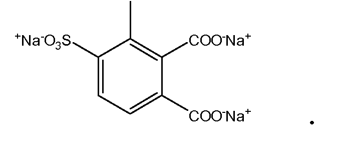

Die modifizierten Pigmente mit an das Pigment gebundenen organischen Gruppen von unsubstituierten oder substituierten 1,2-Benzoldicarbonsäuren und/oder deren Salze, können erhältlich sein indem man Verbindungen der allgemeinen Formel 3 und/oder 4 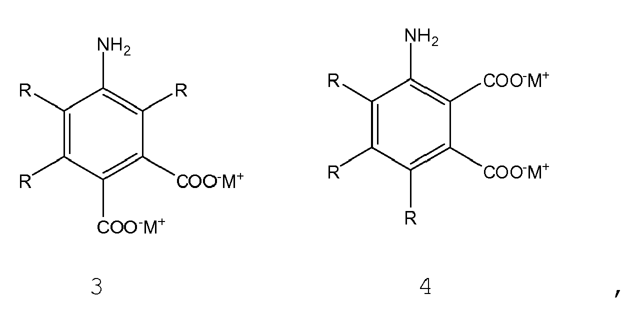 wobei R und M⁺ die oben genannte Bedeutung haben, mit Alkalimetallnitrit, vorzugsweise NaNO₂, im sauren pH-Bereich diazotiert und dieses mit dem Pigment umsetzt.

Die modifizierten Pigmente können durch Diazotierung von Verbindungen der allgemeinen Formel 3 und/oder 4 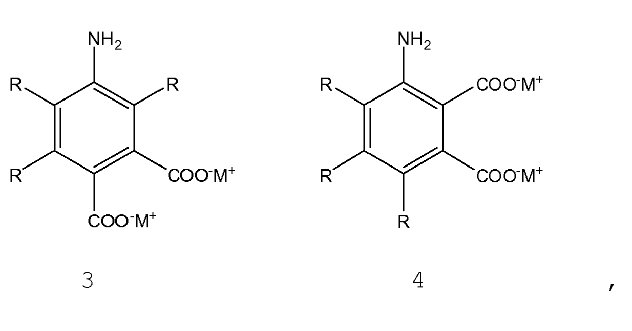 wobei R und M⁺ die oben genannte Bedeutung haben, mit Alkalimetallnitrit, vorzugsweise NaNO₂, im sauren pH-Bereich und Umsetzung mit dem Pigment hergestellt werden.

Bei dem Verfahren kann man zunächst das Pigment und die Verbindungen der allgemeinen Formel 3 und/oder 4 mischen, beispielsweise als eine wäßrige Suspension, anschließend einen sauren pH-Bereich einstellen und dann das Alkalimetallnitrit zugeben.

Bei dem Verfahren kann man zunächst das Pigment und die in einen sauren pH-Bereich eingestellten Verbindungen der allgemeinen Formel 3 und/oder 4 mischen und dann das Alkalimetallnitrit zugeben.

Bei dem Verfahren kann man zunächst die in einen sauren pH-Bereich eingestellten Verbindungen der allgemeinen Formel 3 und/oder 4 mit Alkalimetallnitrit mischen und dann das Reaktionsprodukt mit dem Pigment umsetzen.

Verbindungen der allgemeinen Formel 3 und 4 können beispielsweise sein 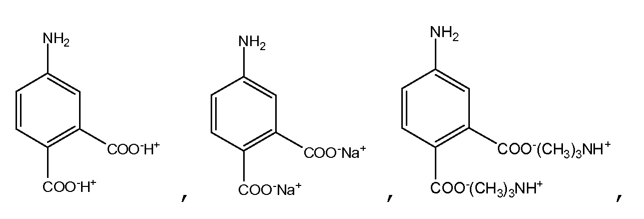 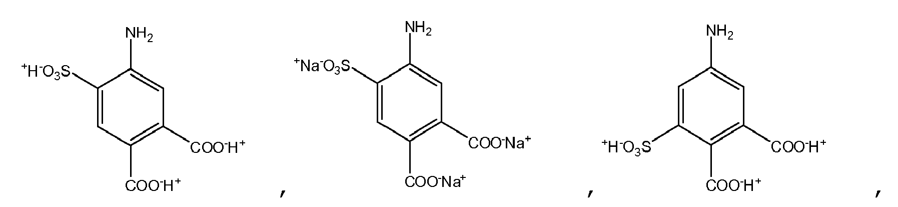 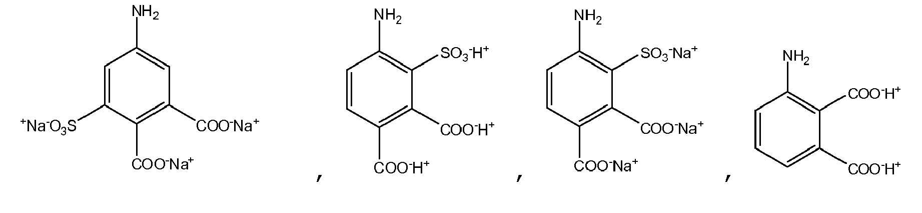 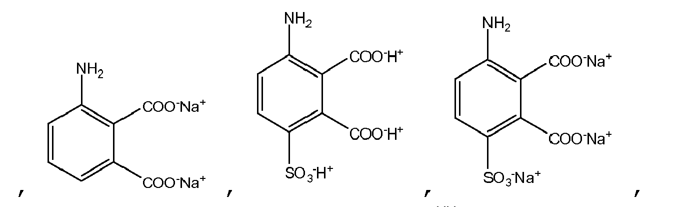 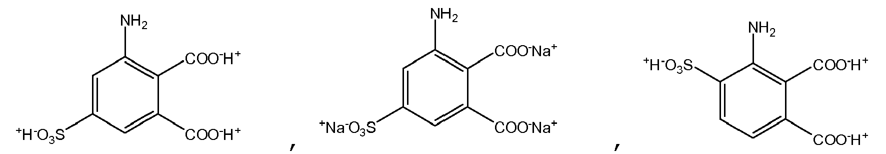 oder

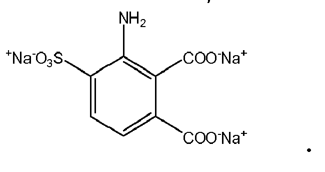

Als Pigment kann Kohlenstoffmaterial oder Buntpigment eingesetzt werden.

Als Buntpigment kann beispielsweise Gelb-, Orange-, Rot-, Magenta-, Violett-, Blau-, Cyan-, Grün- oder Braunpigment, verwendet werden. Vorzugsweise kann als Buntpigment anorganisches Blaupigment, beispielsweise Eisenblau, Ultramarinblau, Kobaltblau oder Mischphasenblaupigment, oder organisches Blaupigment, beispielsweise Phthalocyaninblau oder Indanthrenblau, eingesetzt werden.

Als Kohlenstoffmaterial kann Ruß, Graphitpulver, Graphitfasern, Kohlenstofffasern, Kohlenstofffibrillen, Kohlenstoffnanoröhren (Carbon Nanotubes), Aerogele, Kohlenstoffgewebe, glasartige Kohlenstoffprodukte, Aktivkohle und Fullerene eingesetzt werden.

Als Ruß kann Furnaceruß, Gasruß, Channelruß, Flammruß, Thermalruß, Acetylenruß, Plasmaruß, Inversionsruß, bekannt aus DE 195 21 565, Si-haltige Ruße, bekannt aus WO 98/45361 oder DE 196 13 796, oder metallhaltige Ruße, bekannt aus WO 98/42778, Lichtbogenruß und Ruße, die Nebenprodukte chemischer Produktionsprozesse sind, eingesetzt werden.

Das erfindungsgemäße modifizierte Pigment und/oder das Pigment kann durch vorgelagerte Reaktionen aktiviert werden. Dies können zum Beispiel Oxidationsreaktionen sein. Als Oxidationsmittel können beispielsweise Ammoniumperoxodisulfat, Wasserstoffperoxid, Ozon, Sauerstoff (rein oder als Luft), Kaliumbromat und/oder Natriumperborat eingesetzt werden. Das Pigment kann ein oxidierter Gasruß sein.

Es können Kohlenstoffmaterialien, die als Verstärkerfüllstoff in Kautschukmischungen verwendet werden, eingesetzt werden. Es können Farbruße eingesetzt werden. Weitere Kohlenstoffmaterialien können sein: Leitfähigkeitsruß, Kohlenstoffmaterial zur UV-Stabilisierung, Kohlenstoffmaterial als Füllstoff in anderen Systemen als Kautschuk, wie zum Beispiel in Bitumen oder Kunststoff, oder Kohlenstoffmaterial als Reduktionsmittel in der Metallurgie.

Das Verfahren zur Herstellung der modifizierten Pigmente kann in wäßriger Lösung oder wäßriger Suspension durchgeführt werden.

Das Pigment kann dispergiert werden. Die Pigmentdispersion kann aus dem Pigment, Wasser und einem Netzmittel bestehen.

Als Netzmittel können anionische, kationische und/oder nichtionische Netzmittel verwendet werden.

Als anionisches Netzmittel kann Tamol, Vandispers CB (Ligninsulfonat) verwendet werden.

Als kationisches Netzmittel kann Akypoquat 132 (kationischer Fettester (CTFA: Lauroyl PG-Trimonium Chloride)) der Firma Kao Chemicals GmbH, Bayowet FT 738 VP AC 2023 (Quarternäres Fluoralkylammoniumiodid) der Firma Bayer AG, DP2-7949 (Wässrige Lösung kationischer Homopolymere) der Firma Ciba Geigy Chemicals, DP7-7961 (Wässrige Lösung kationischer Polymere) der Firma Ciba Geigy Chemicals, DP7-7962 (Wässrige Lösung kationischer Polymere) der Firma Ciba Geigy Chemicals, DP7-7963 (Wässrige Lösung kationischer Polymere) der Firma Ciba Geigy Chemicals, Epikuron 200 (Phosphatidylcholin) der Firma Lukas Meyer, Ethoxamine SF 11 (Etoxyliertes Fettamin mit 11 Mol Ethylenoxid) der Firma Witco, Ethoxamine SF 15 (Ethoxyliertes Fettamin mit 15 Mol Ethylenoxid) der Firma Witco, Forbest 13 (Compound neutr., saurer Polyester und Fettalkohol) der Firma Lukas Meyer, Forbest 610 (Carbonsäure-Diamin-Zubereitung) der Firma Lukas Meyer, Magnafloc 1797 (Wässrige Lösung kationischer quervernetzter Kondensationsharze) der Firma Ciba Speciality Chemicals, Protectol KLC 50 (Dimethyl-C 12/14-alkylbenzylammoniumchlorid in Wasser (ca. 50%)) der Firma BASF, Rewoquat CPEM (Cocospentaethoxymethylammoniummethosulfat) der Firma Witco Surfactants GmbH, Rewoquat RTM 50 (Ricinolsäure propylamido trimethylammonium methosulfat) der Firma Witco Surfactans GmbH, Sochamine 35 (Alkylimidazolin) der Firma Witco Surfactans GmbH, eingesetzt werden.

Als nichtionisches Netzmittel kann eine Verbindung aus der Gruppe vernetzte Polyoxyethylenacrylsäure, Fettalkoholoxethylate, Nonylphenolpolyglycolether, Polyvinylpyrolidon, Glycerolfettsäureester, Propylenglykolfettsäureester, Sorbitanfettsäureester, Polyoxyethylensorbitanfettsäureester, Tetraoleinsäurepolyoxyethylensorbitol, Polyoxyethylenalkylether, Polyoxyethylenalkylphenylether, Polyoxyethylenpolyoxypropylenglykol, Polyoxyethylenpolyoxypropylenalkylether, Polyethylenglycolfettsäureester, höhere Fettsäurealkoholester, Polyhydricalkoholfettsäureester, eingesetzt werden.

Die Pigmentdispersion kann hergestellt werden, indem man das Pigment gegebenenfalls gemeinsam mit dem oder den Netzmitteln in Wasser dispergiert und gegebenenfalls für die Dispergierung Perlmühlen, Ultraschall-Geräte, Flügelrührer, Dissolver oder ein Ultra-Turrax verwendet. Im Anschluß an die Dispergierung kann die Rußdispersion zentrifugiert oder gefiltert werden.

Zur Einstellung des sauren pH-Wertes der wäßrigen Lösung oder Suspension des primären Amins können anorganische Säuren, vorzugsweise Salzsäure, verwendet werden. Der pH-Wert kann kleiner 6, vorzugsweise kleiner 3, sein.

Die Pigmentdispersion und die saure, wäßrige Lösung des primären Amins können unter Rühren gemischt werden.

Das Natriumnitrit kann in Wasser gelöst werden. Die Natriumnitrit-Lösung kann zur Pigmentdispersion/Amin-Mischung zugetropft werden. Die Umsetzung mit Natriumnitrit-Lösung kann bei Temperaturen von -5°C bis 30°C durchgeführt werden.

Die modifizierten Pigmente können als Füllstoff, Verstärkerfüllstoff, UV-Stabilisator, Leitfähigkeitsruß oder Pigment verwendet werden.
Die erfindungsgemäßen modifizierten Pigmente können in Kautschuk, Kunststoff, Druckfarben, Tinten, Inkjet-Tinten, xerographischen Tonern, Lacken und Farben, Bitumen, Beton und anderen Baustoffen oder Papier eingesetzt werden. Ferner können die erfindungsgemäßen modifizierten Pigmente als Reduktionsmittel in der Metallurgie verwendet werden. Die erfindungsgemäßen modifizierten Pigmente können zur Herstellung von Gummimischungen, beispielsweise zur Herstellung von Reifen, verwendet werden.

Die erfindungsgemäße Ink Jet Tinte kann zusätzlich ein oder mehrere Additive enthalten, wie Biozide, Netzmittel, Ketone, Glykole, Alkohole oder Gemische der vorgenannten Verbindungen. Diese Additive können auf spezielle Anwendungen hin zugesetzt werden und zum Beispiel auch aus monomeren, oligomeren oder polymeren Verbindungen bestehen. Diese Additive können Verbesserungen von Eigenschaften, wie Dispergiergrad, Lagerstabilität, Gefrierstabilität, Trocknungsverhalten, Filmbildungsvermögen, Vernetzbarkeit und/oder die Anbindung an bestimmte Trägermaterialien, wie Papier, Metall, Glas, Polymere, Fasern, Leder, Holz, Beton oder Kautschuk, bewirken.

Das Biozid kann in Mengen von 0,01 -1,0 Gew.-% zugesetzt werden. Als Biozid können Isothiazolinon-Derivate, Formaldehydabspalter oder Kombinationsprodukte beider Produktklassen verwendet werden. Beispielsweise können als Biozid Parmetol der Firma Schülke & Mayr, Ebotec der Firma Bode Chemie, Acticide der Firma Thor Chemie oder Proxel der Firma Zeneca eingesetzt werden.

Die erfindungsgemäße Ink Jet Tinte kann einen Farbstoff enthalten.

Die erfindungsgemäße Ink Jet Tinte kann ein dispergierunterstützendes Additiv enthalten. Das dispergierunterstützende Additiv kann in Mengen von 0,1 - 30 Gew.-%, vorzugsweise 0,3 - 10 Gew.-%, bezogen auf die Tinte eingesetzt werden. Das Molekulargewicht des dispergierunterstützenden Additivs kann 1000 bis 20000 g/mol, vorzugsweise 14500 bis 17000 g/mol, sein. Die Säurezahl des dispergierunterstützenden Additivs kann 120 bis 320, vorzugsweise 180 bis 280, sein. Als dispergierunterstützendes Additiv können Styrol-Acrylsäure Copolymere verwendet werden. Die Copolymere können statistische, alternierende, Block- oder Pfropfcopolymere sein. Beispielsweise kann als dispergierunterstützendes Additiv Joncryl 678, Joncryl 680, Joncryl 682 oder Joncryl 690 der Firma Johnson Polymer B.V. eingesetzt werden. Als dispergierunterstützendes Additiv können vollständig Ammonium- oder Alkalihydroxid-neutralisierte Formen, insbesondere NaOH neutralisierte Formen, der Styrol-Acrylsäure Copolymere verwendet werden.

Die erfindungsgemäße Ink Jet Tinte kann zum Bedrucken von Textilien, Folien und Papier verwendet werden.

Ein weiterer Gegenstand der Erfindung ist ein Verfahren zur Verbesserung des Ausblutens bei Ink Jet Tinten, welches dadurch gekennzeichnet ist, das die Tinte ein modifiziertes Pigment enthält, wobei das modifizierte Pigment ein Pigment mit gebundenen organischen Gruppen von unsubstituierten oder substituierten Benzoldicarbonsäuren und/oder deren Salze ist. Die Benzoldicarbonsäure kann bevorzugt eine 1,2-Benzoldicarbonsäure sein.

Die modifizierten Pigmente mit an das Pigment gebundenen organischen Gruppen von unsubstituierten oder substituierten Benzoldicarbonsäuren und/oder deren Salze, können zur Verbesserung des Ausblutens bei Ink Jet Tinten verwendet werden. Die Benzoldicarbonsäure kann bevorzugt eine 1,2-Benzoldicarbonsäure sein.

Die erfindungsgemäße Ink Jet Tinte hat den Vorteil, dass das Ausbluten gegenüber dem Stand der Technik verbessert ist.

### Beispiele

Als Pigment wird in den Beispielen der Ruß S 160 eingesetzt. Der Gasruß S 160 ist ein Verkaufsprodukt der Firma Evonik Degussa GmbH.

### Beispiel 1: Herstellung der modifizierten Ruße

Das Beispiel beschreibt die Herstellung eines mit 0,8 mmol/g des entsprechenden Modifizierungsmittels modifizierten Rußes.

Es werden 70g Ruß S 160 und 800g eisgekühltes destilliertes Wasser in einem 2 l Becherglas vorgelegt und mit einem Heidolph Rührer Modell ZR 2051 mit Flügelrührer aufgerührt.

In einem 100 ml Becherglas werden 4,2g Natriumnitrit in 8g Eis und 12g destilliertem Wasser mit einem Magnetrührer aufgerührt.

Die in der Tabelle 1 genannten Mengen an Modifizierungsmittel werden jeweils in einem 40 ml Becherglas in 45g eiskaltem destilliertem Wasser aufgeschlämmt und unter Kühlung mit 16,3g konz. Salzsäure versetzt. Dazu wird nun vorsichtig die Natriumnitrit-Lösung zudosiert.

Diese Lösung wird nun innerhalb von 30 Minuten zur Rußaufschlämmung unter moderatem Rühren zugetropft. Man rührt 1 Stunde nach und erhöht die Temperatur der Reaktionsmischung mit Hilfe eines IKA Combimag RET Magnetrührers/Heizplatte auf 30°C und rührt bei dieser Temperatur 3 Stunden nach.

Die Reaktionsmischung wird über eine Nutsche mit Blaubandfilter abgezogen und der Filterkuchen mit 5 Liter destilliertem Wasser gewaschen. Der Filterkuchen wird über Nacht bei 120°C getrocknet.

**Tabelle 1**

| | Modifizierungsmittel | Menge an Modifizierungsmittel (g) |
|---|---|---|
| Modifizierter Ruß 1 | 6-Amino-2-naphtholcarbonsäure | 10,48 |
| Modifizierter Ruß 2 | 4-Aminophthalsäure | 10,14 |
| Modifizierter Ruß 3 | 5-Aminoisoterephthalsäure | 10,14 |
| Modifizierter Ruß 4 | 2-Aminoterephthalsäure | 10,14 |
| Modifizierter Ruß 5 | Sulfanilsäure | 9,70 |
| Modifizierter Ruß 6 | 5-Amino-2-naphthalensulfonsäure | 13,40 |

### Beispiel 2: Herstellung von Dispersionen mit den modifizierten Rußen

Das Beispiel beschreibt die Herstellung einer Dispersion (Tabelle 2) mit den unter Beispiel 1 beschriebenen modifizierten Rußen sowie einem Degussa Ruß S 160.

Es werden jeweils 60g Ruß und 340g destilliertes Wasser in einem 1 l Rührgefäß vorgelegt und mit einem Spatel eingerührt. Mit 2-(Dimethylamino)-ethanol wird ein pH-Wert zwischen 8-9 eingestellt. Mit einem Ultra-Turrax wird bei 10000 UpM unter Kühlung die Aufschlämmung vordispergiert. Diese Vordispersion wird unter Kühlung durch eine Hielscher Ultraschall Durchflusszelle mit Ultraschallgeber UIP 500 in 3 Passagen mit einer Zahnradpumpe der Firma Ismatec Modell MV-Z bei Einstellung 27 der Pumpe durchgepumpt und bei maximaler Leistung des Ultraschallgebers dispergiert.

Die Verwendung von Ruß S 160 führt zu einer sofortigen Verdickung. Eine flüssige Dispersion 7 ist nicht herstellbar.

**Tabelle 2:**

| Dispersion | Enthaltend: |
|---|---|
| Dispersion 1 | Modifizierter Ruß 1 |
| Dispersion 2 | Modifizierter Ruß 2 |
| Dispersion 3 | Modifizierter Ruß 3 |
| Dispersion 4 | Modifizierter Ruß 4 |
| Dispersion 5 | Modifizierter Ruß 5 |
| Dispersion 6 | Modifizierter Ruß 6 |
| Dispersion 7 | Ruß S 160 |

### Beispiel 3: Herstellung der Tinte

Es werden Tinten (Tabelle 3) mit einem Pigmentgehalt von 5% des modifizierten Rußes unter Verwendung der in Beispiel 2 genannten Dispersionen formuliert. Die Tinten beinhalten weiterhin 6 Gew.-% 2-Pyrrolidon, 3 Gew.-% 1,5-Pentandiol, 1,5 Gew.-% 2-Propanol, 1,5 Gew.-% Liponic EG-07, 3 Gew.-% Triethylenglycol-dimethylether; aufgefüllt auf 100 Gew.-% mit destilliertem Wasser.

Der pH wird mit 2-(Dimethylamino)-ethanol zwischen 8-9 einreguliert.

**Tabelle 3:**

| Tinte | Enthaltend: |
|---|---|
| Tinte 1 | Dispersion 1 |
| Tinte 2 | Dispersion 2 |
| Tinte 3 | Dispersion 3 |
| Tinte 4 | Dispersion 4 |
| Tinte 5 | Dispersion 5 |
| Tinte 6 | Dispersion 6 |

### Beispiel 4: Herstellung der Tinte 8

Es wird eine Tinte 8 unter Verwendung einer Cab-O-Jet 300 Dispersion der Firma Cabot formuliert. Cab-O-Jet besteht aus 15 Gew.-% eines oberflächenfunktionellen carboxylierten Rußes. Die Tinte beinhaltet 5 Gew.-% Ruß, 6 Gew.-% 2-Pyrrolidon, 3 Gew.-% 1,5-Pentandiol, 1,5 Gew.-% 2-Propanol, 1,5 Gew.-% Liponic EG-07, 3 Gew.-% Triethylenglycoldimethylether; aufgefüllt auf 100 Gew.-% mit destilliertem Wasser.

Der pH-Wert wird mit 2-(Dimethylamino)-ethanol zwischen 8-9 einreguliert.

### Beispiel 5: Beurteilung der Tinten

Zur Beurteilung wird der in 4 Größen unterteilte schwarze Balken in den ersten 4 quadratischen Farbblöcken beginnend von links Weiß, Cyano, Magenta und Gelb aus Bild 2:
Grafikblock für "Ausbluten" und "Ausfransen" der DIN Vorlage 33871-1:2003-10 herangezogen.

### a. Visuelle Beurteilung von Tinten enthaltend modifizierte Ruße bzw. Canon Originaltinte

Es wird eine Rangfolge für das Verhalten des Ausblutens von 1 = kein Ausbluten, 2 = sehr geringes Ausbluten, 3 = geringes Ausbluten, 4 = Ausbluten, 5 = starkes Ausbluten, 6 = sehr starkes Ausbluten festgelegt.

Die Dicarbonsäure in ortho-Stellung zeigt das geringste Ausbluten (Tabelle 4).

**Tabelle 4:**

| Verwendete Tinte | Ausbluten |
|---|---|
| Tinte 1 | 5 |
| Tinte 2 | 1 bis 2 |
| Tinte 3 | 2 bis 3 |
| Tinte 4 | 2 bis 3 |
| Tinte 5 | 5 |
| Tinte 6 | 4 bis 5 |
| Tinte 8 | 2 bis 3 |
| Original Canon BCI-3eBK Tinte | 1 bis 2 |

### b. Messung des Ausblutens von Tinten enthaltend modfizierte Ruße bzw. Canon Originaltinte

Die Messung erfolgt mit einem Bild-Analysator Modell "Personal IAS" des Herstellers qea. Es wird jeweils der drittbreiteste des in 4 Breiten unterteilten schwarzen Balkens in den ersten 4 quadratischen Farbblöcken, beginnend von links Weiß, Cyano, Magenta und Gelb aus Bild 2: Grafikblock für "Ausbluten" und "Ausfransen" der DIN Vorlage 33871-1:2003-10 optisch erfasst und die mittlere Breite in µm vermessen. Von den Messwerten des schwarzen Balkens im Cyano, Magenta und dem Gelbem Messquadrat wird nun der Wert des schwarzen Balkens im weißen Messquadrat abgezogen. Der daraus resultierende Wert gibt Aufschluss über das Ausbluten. Je kleiner der Wert desto geringer das Ausbluten.

Hierbei zeigt die ortho-Dicarbonsäure das geringste Ausbluten (Tabelle 5 + 6).

**Tabelle 5: Papier Kompass Copy Office**

| Verwendete Tinte | Ausbluten Cyano Breite [µm] | Ausbluten Magenta Breite [µm] | Ausbluten Gelb Breite [µm] |
|---|---|---|---|
| Tinte 2 | 6,2 | 0 | 2,9 |
| Tinte 3 | 31,1 | 18,6 | 22,5 |
| Tinte 4 | 18,1 | 11,4 | 26,9 |
| Tinte 8 | 43,7 | 11,5 | 27,7 |
| Original Canon BCI-3eBK Tinte | 11,6 | 3,4 | 9,4 |

**Tabelle 6: Papier Inapa Tecno Office**

| Verwendete Tinte | Ausbluten Cyano Breite [µm] | Ausbluten Magenta Breite [µm] | Ausbluten Gelb Breite [µm] |
|---|---|---|---|
| Tinte 2 | 1 | 0,8 | 4,2 |
| Tinte 3 | 43,5 | 10,4 | 49,6 |
| Tinte 4 | 67,2 | 17,1 | 42,8 |
| Tinte 8 | 72,8 | 26,2 | 42,2 |
| Original Canon BCI-3eBK Tinte | 20,2 | 7,7 | 15 |

## Patentansprüche

1. Ink Jet Tinte enthaltend ein modifiziertes Pigment, **dadurch gekennzeichnet, dass** das modifizierte Pigment ein Pigment mit gebundenen organischen Gruppen von unsubstituierten oder substituierten 1,2-Benzoldicarbonsäuren und/oder deren Salze ist.

2. Ink Jet Tinte gemäß Anspruch 1, **dadurch gekennzeichnet, dass** die unsubstituierten oder substituierten 1,2-Benzoldicarbonsäurengruppen und/oder deren Salze Verbindungen der Formel 1 oder 2 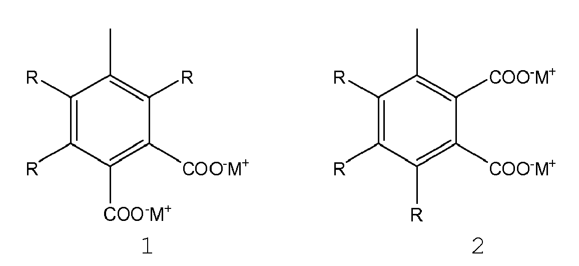 sind,
wobei R gleich oder verschieden sind und aus H, Akzeptorgruppen, Donatorgruppen, Alkyl- oder Arylgruppen mit Akzeptor- beziehungsweise Donatorgruppen, hydrophilen und/oder hydrophoben Gruppen bestehen und M⁺ gleich H⁺, Na⁺, K⁺, Li⁺, NH₄⁺, (CH₃)₃NH⁺ und (CH₃)₄N⁺ ist.

3. Verwendung der Ink Jet Tinte gemäß Anspruch 1 zum Bedrucken von Textilien, Folien und Papier.

4. Verfahren zur Verbesserung des Ausblutens bei Ink Jet Tinten, **dadurch gekennzeichnet**, das die Tinte ein modifiziertes Pigment enthält, wobei das modifizierte Pigment ein Pigment mit gebundenen organischen Gruppen von unsubstituierten oder substituierten Benzoldicarbonsäuren und/oder deren Salze ist.

5. Verwendung von modifizierten Pigmenten mit an das Pigment gebundenen organischen Gruppen von unsubstituierten oder substituierten Benzoldicarbonsäuren und/oder deren Salze zur Verbesserung des Ausblutens bei Ink Jet Tinten.
